(19) Europäisches Patentamt
European Patent Office
Office européen des brevets

(11) **EP 4 761 309 A1**

(12) **EUROPEAN PATENT APPLICATION**
published in accordance with Art. 153(4) EPC

(43) Date of publication:
**17.06.2026 Bulletin 2026/25**

(21) Application number: **25760215.1**

(22) Date of filing: **26.08.2025**

(51) International Patent Classification (IPC):
*H04W 12/00* (2021.01)

(52) Cooperative Patent Classification (CPC):
**H04L 9/08; H04W 12/047; H04W 12/08;
H04W 24/08; H04W 84/12**

(86) International application number:
**PCT/KR2025/013017**

(87) International publication number:
**WO 2026/071502 (02.04.2026 Gazette 2026/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.09.2024 KR 20240129522**

(71) Applicant: **Samsung Electronics Co., Ltd.
Suwon-si, Gyeonggi-do 16677 (KR)**

(72) Inventors:
• **CHOI, Seongsu
Suwon-si, Gyeonggi-do 16677 (KR)**

• **LEE, Sunghee
Suwon-si, Gyeonggi-do 16677 (KR)**
• **KANG, Minho
Suwon-si, Gyeonggi-do 16677 (KR)**
• **NAM, Chounjong
Suwon-si, Gyeonggi-do 16677 (KR)**
• **YOON, Yeji
Suwon-si, Gyeonggi-do 16677 (KR)**
• **YOON, Jaeho
Suwon-si, Gyeonggi-do 16677 (KR)**
• **LEE, Sunkee
Suwon-si, Gyeonggi-do 16677 (KR)**

(74) Representative: **Walaski, Jan Filip et al
Venner Shipley LLP
TIDE Bankside
8 Emerson Street
London SE1 9DU (GB)**

(54) **ELECTRONIC DEVICE FOR WIRELESS LAN COMMUNICATION, AND OPERATION METHOD THEREOF**

(57)     An embodiment of the disclosure relates to a device and a method for performing wireless LAN communication in an electronic device. An electronic device may include communication circuitry, at least one processor, and memory, wherein the memory may store instructions which, when executed by the at least one processor, cause the electronic device to identify an encryption key update period of each of a plurality of links with an external electronic device, select at least one link to be used to update an encryption key from among the plurality of links, based on a link quality of each of the plurality of links when it is determined based on the encryption key update period of each of the plurality of links that at least one link for updating the encryption key exists, and transmit information related to the selected at least one link to the external electronic device. Other embodiments may be possible.

EP 4 761 309 A1

# FIG. 4

400

```
                    START
                      │
                      ▼
┌──────────────────────────────────────────────────┐
401 │  SET UP PLURALITY OF LINKS WITH EXTERNAL ELECTRONIC DEVICE │
└──────────────────────────────────────────────────┘
                      │
                      ▼
┌──────────────────────────────────────────────────┐
403 │  IDENTIFY ENCRYPTION KEY UPDATE PERIOD OF PLURALITY OF LINKS │
└──────────────────────────────────────────────────┘
                      │
                      ▼
405          IS THERE LINK                         NO
          FOR UPDATING ENCRYPTION  ──────────────────┐
                  KEY?                                │
                      │ YES                           │
                      ▼                               │
┌──────────────────────────────────────────────┐     │
407 │  IDENTIFY LINK QUALITY OF EACH LINK       │     │
└──────────────────────────────────────────────┘     │
                      │                               │
                      ▼                               │
┌──────────────────────────────────────────────┐     │
409 │  SELECT LINK TO BE USED FOR UPDATING ENCRYPTION KEY │  │
└──────────────────────────────────────────────┘     │
                      │                               │
                      ▼                               │
┌──────────────────────────────────────────────┐     │
    │  TRANSMIT INFORMATION RELATED TO LINK TO BE USED │     │
411 │  FOR UPDATING ENCRYPTION KEY TO EXTERNAL ELECTRONIC DEVICE │  │
└──────────────────────────────────────────────┘     │
                      │◄──────────────────────────────┘
                      ▼
                    END
```

## Description

[Technical Field]

The disclosure relates to an electronic device for wireless LAN communication and an operating method thereof.

[Background Art]

A wireless local area network (WLAN) system may support wireless connections of various electronic devices, such as a smartphone, a tablet personal computer, or a notebook computer, by using a designated frequency band (e.g., a band of about 2.4 GHz, a band of about 5 GHz, and/or a band of about 6 GHz).

A WLAN system may be installed not only in a private space, such as home, but also in a public space, such as an airport, a train station, an office, or a department store. A WLAN system may be defined in the Institute of Electrical and Electronics Engineers (IEEE) 802.11 standard. For example, the IEEE 802.11 standard is continuously evolving, such as IEEE 802.11b, IEEE 802.11a, IEEE 802.11g, IEEE 802.11n, IEEE 802.11ac, IEEE 802.11ax, and IEEE 802.11be.

The above information is presented as background information only to assist with an understanding of the disclosure. No determination has been made, and no assertion is made, as to whether any of the above might be applicable as prior art with regard to the disclosure.

[Disclosure of Invention]

[Solution to Problem]

When an electronic device is connected to an access point (AP) via wireless LAN communication, the electronic device may transmit and/or receive traffic to and/or from the AP in a broadcast mode and/or a multicast mode by using an encryption key (e.g., a group temporal key (GTK)) provided by the AP.

The encryption key (e.g., the GTK) received by the electronic device from the AP may be periodically updated based on a new encryption key (e.g., a GTK) generated by the AP.

When the electronic device fails to receive information related to a new encryption key (e.g., a GTK) from the AP due to entry into a low power mode (e.g., a sleep mode or a power save mode), a weak electric field environment, or an increase in channel utilization rate (e.g., channel utilization (CU)), the wireless LAN connection with the AP may be forcibly disconnected.

Various embodiments disclose a device and a method for updating an encryption key for wireless LAN communication in an electronic device.

Technical aspects to be achieved in the disclosure are not limited to the technical aspects mentioned above, and other technical aspects not mentioned will be clearly understood by those skilled in the art from the following description.

According to an embodiment, an electronic device may include communication circuitry supporting wireless LAN communication, at least one processor including processing circuitry, and memory storing instructions. According to an embodiment, the instructions, when executed by the at least one processor individually or collectively, cause the electronic device to set up a plurality of links with an external electronic device. According to an embodiment, the instructions, when executed by the at least one processor individually or collectively, cause the electronic device to identify an encryption key update period of each of the plurality of links. According to an embodiment, the instructions, when executed by the at least one processor individually or collectively, cause the electronic device to identify a link quality of each of the plurality of links when it is determined based on the encryption key update period of each of the plurality of links that at least one link for updating an encryption key exists. According to an embodiment, the instructions, when executed by the at least one processor individually or collectively, cause the electronic device to select at least one link to be used to update the encryption key from among the plurality of links, based on the link quality of each of the plurality of links. According to an embodiment, the instructions, when executed by the at least one processor individually or collectively, cause the electronic device to transmit information related to the selected at least one link to the external electronic device.

According to an embodiment, an operating method of an electronic device may include setting up a plurality of links with an external electronic device via wireless LAN communication. According to an embodiment, the operating method of the electronic device may include identifying an encryption key update period of each of the plurality of links. According to an embodiment, the operating method of the electronic device may include identifying a link quality of each of the plurality of links when it is determined based on the encryption key update period of each of the plurality of links that at least one link for updating an encryption key exists. According to an embodiment, the operating method of the electronic device may include selecting at least one link to be used to update the encryption key from among the plurality of links, based on the link quality of each of the plurality of links. According to an embodiment, the operating method of the electronic device may include transmitting information related to the selected at least one link to the external electronic device.

According to an embodiment, a non-transitory computer-readable recording medium (or computer program product) storing one or more programs may be described. According to an embodiment, the one or more programs may include an instruction which, when executed by at least one processor of an electronic device, causes the electronic device to perform an operation of setting up a plurality of links with an external electronic device via wireless LAN communication, an operation of identifying an encryption key update period of each of the plurality of links, an operation of identifying a link quality of each of the plurality of links when it is determined based on the encryption key update period of each of the plurality of links that at least one link for updating an encryption key exists, an operation of selecting at least one link to be used to update the encryption key from among the plurality of links, based on the link quality of each of the plurality of links, and an operation of transmitting information related to the selected at least one link to the external electronic device.

According to exemplary embodiments, an electronic device may maintain wireless LAN communication with an external electronic device (e.g., an access point (AP)) by updating an encryption key (e.g., a GTK) of each link through at least one link determined as being the most stable in view of a channel quality among a plurality of links set up with the external electronic device.

In addition, various effects directly or indirectly identified through this document may be provided.

Effects obtainable from the disclosure are not limited to the effects mentioned above, and other effects not mentioned will be clearly understood by those skilled in the art from the following description.

[Brief Description of Drawings]

In describing the drawings, the same or like reference numerals may be used to refer to the same or like elements.

FIG. 1 is a block diagram of an electronic device in a network environment;
FIG. 2 illustrates an example of a multi-link operation in a wireless LAN system;
FIG. 3 is a block diagram of an electronic device for wireless LAN communication;
FIG. 4 is a flowchart illustrating that an electronic device updates an encryption key;
FIG. 5 illustrates an example in which an electronic device identifies an encryption key update period of each link;
FIG. 6 illustrates an example in which an electronic device identifies an encryption key update period of each link;
FIG. 7 illustrates an example in which an electronic device identifies an encryption key update period of each link;
FIG. 8 is a flowchart illustrating that an electronic device selects a link for updating an encryption key;
FIG. 9 is a flowchart illustrating that an electronic device selects a link for updating an encryption key in view of a combination of candidate links;
FIG. 10 is a flowchart illustrating that an electronic device sets up a candidate link;
FIG. 11 is a flowchart illustrating that an electronic device updates an encryption key;
FIG. 12 is a flowchart illustrating that an external electronic device updates an encryption key of an electronic device; and
FIG. 13 illustrates an example in which an external electronic device transmits information related to update of an encryption key.

[Mode for the Invention]

Hereinafter, embodiments will be described in detail reference to the attached drawings.

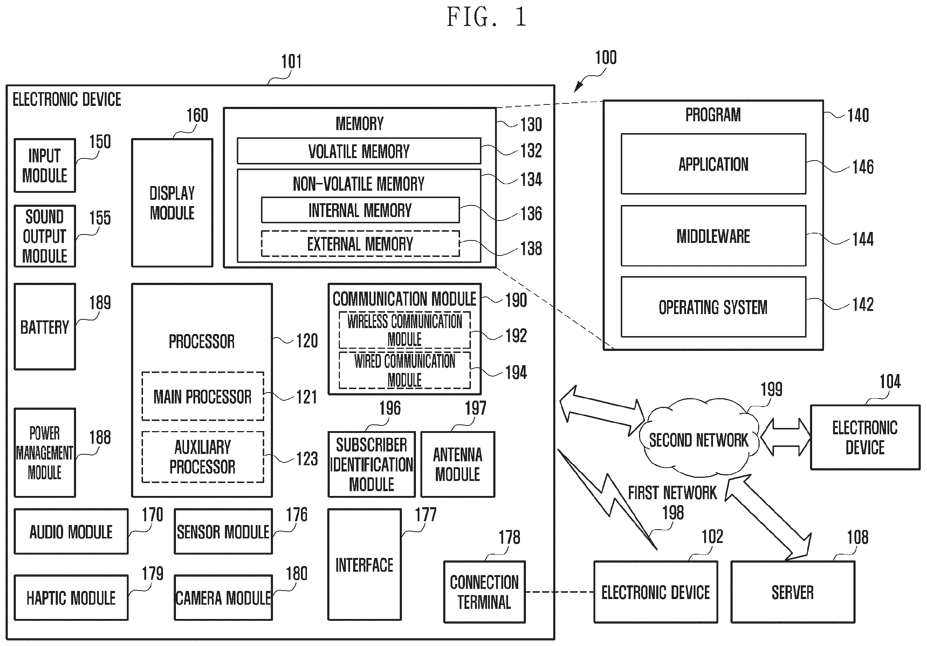

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

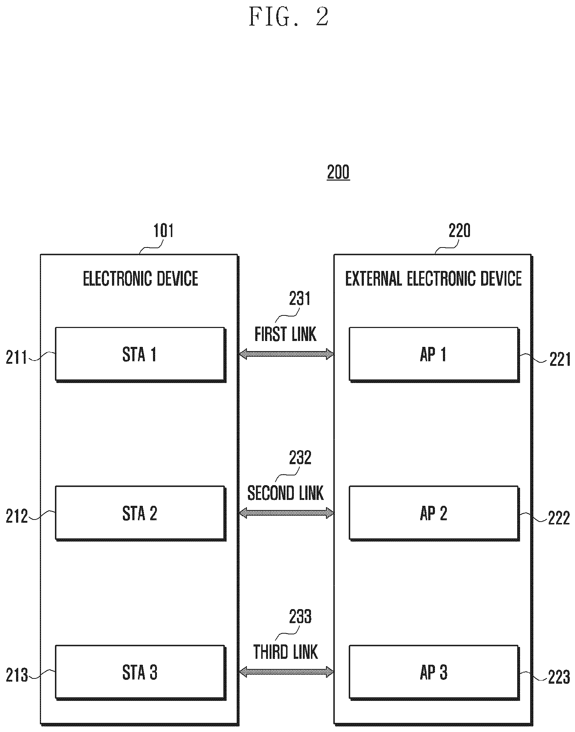

FIG. 2 illustrates an example of a multi-link operation in a wireless LAN system. For example, an electronic device 101 of FIG. 2 may be at least partly similar to the electronic device 101 of FIG. 1, or may include other embodiments of the electronic device.

With reference to FIG. 2, the wireless LAN system 200 may include the electronic device 101 and/or an external electronic device 220 (e.g., the electronic device 102 of FIG. 1).

The electronic device 101 may perform wireless LAN communication with the external electronic device 220. For example, wireless LAN communication is a communication method defined in the IEEE 802.11 standard, and may include Wi-Fi. For example, the external electronic device 220 may function as a base station that provides wireless LAN communication to at least one electronic device 101 located within the communication radius of the wireless LAN system 200. For example, the external electronic device 220 may include an access point (AP) of the IEEE 802.11 standard. For example, the external electronic device 220 may include a plurality of APs (e.g., AP 1 221, AP 2 222, and/or AP 3 223) corresponding to a plurality of links (e.g., a first link 231, a second link 232, and/or a third link 233) with the electronic device 101. For example, the electronic device 101 may include a station (STA) of the IEEE 802.11 standard. For example, the electronic device 101 may include a plurality of STAs (e.g., STA 1 211, STA 2 212, and/or STA 3 213) corresponding to a plurality of links (e.g., the first link 231, the second link 232, and/or the third link 233) with the external electronic device 220.

The electronic device 101 and the external electronic device 220 may support a multi-link operation (MLO). The MLO may include a communication method of transmitting and/or receiving data (or a packet) through a plurality of links (e.g., the first link 231, the second link 232, and/or the third link 233). For example, the plurality of links for the MLO may include different media access control (MAC) addresses. For example, the plurality of STAs (e.g., STA 1 211, STA 2 212, and/or STA 3 213) included in the electronic device 101 may include different MAC addresses. For example, the electronic device 101 and the external electronic device 220 may perform the wireless LAN communication by using one internet protocol (IP) address.

When the electronic device 101 supports the MLO, the electronic device 101 may perform wireless LAN communication with the external electronic device 220 through each link (e.g., the first link 231, the second link 232, and/or the third link 233). For example, the electronic device 101 (e.g., STA 1 211) may transmit and/or receive data (or a packet) to and/or from the external electronic device 220 through the first link 231. For example, the data may be transmitted and/or received through a frequency band or channel corresponding to the first link 231. For example, the electronic device 101 (e.g., STA 2 212) may transmit and/or receive data to and/or from the external electronic device 220 through the second link 232. For example, the data may be transmitted and/or received through a frequency band or channel corresponding to the second link 232. For example, the electronic device 101 (e.g., STA 3 213) may transmit and/or receive data to and/or from the external electronic device 220 through the third link 233. For example, the data may be transmitted and/or received through a frequency band or channel corresponding to the third link 233.

When the external electronic device 220 supports the MLO, the external electronic device 220 may perform wireless LAN communication with the electronic device 101 through each link (e.g., the first link 231, the second link 232, and/or the third link 233). For example, the external electronic device 220 (e.g., AP 1 221) may transmit and/or receive data (or packets) to and/or from the electronic device 101 through the first link 231. For example, the external electronic device 220 (e.g., AP 2 222) may transmit and/or receive data to and/or from the electronic device 101 through the second link 232. For example, the external electronic device 220 (e.g., AP 3 223) may transmit and/or receive data to and/or from the electronic device 101 through the third link 233.

The frequency bands (or channels) of the first link 231, the second link 232, and the third link 233 may be configured to be different from each other. For example, the first link 231 may support a band of about 2.4 GHz, the second link 232 may support a band of about 5 GHz, and the third link 233 may support a band of about 6 GHz.

The first link 231, the second link 232, and/or the third link 233 may be used by an external device other than the electronic device 101. For example, the external device may include an electronic device that supports wireless LAN communication other than the electronic device 101 and the external electronic device 220. For example, the electronic device 101 may support carrier sense multiple access with collision avoidance (CSMA/CA) so that the electronic device 101 and the external device do not interfere with each other by using the same link at the same time. For example, when the electronic device 101 supports CSMA/CA, the electronic device 101 may identify whether the external device transmits data through a specific link (e.g., the first link 231, the second link 232, and/or the third link 233). When determining that the external device is transmitting data through the specific link, the electronic device 101 may restrict transmission of data through the specific link. For example, when determining that the external device is not transmitting data through the specific link, the electronic device 101 may transmit data through the specific link according to a specified method. For example, the specified method may include a clear channel assessment (CCA). For example, the first link 231, the second link 232, and/or the third link 233 may independently support CSMA/CA.

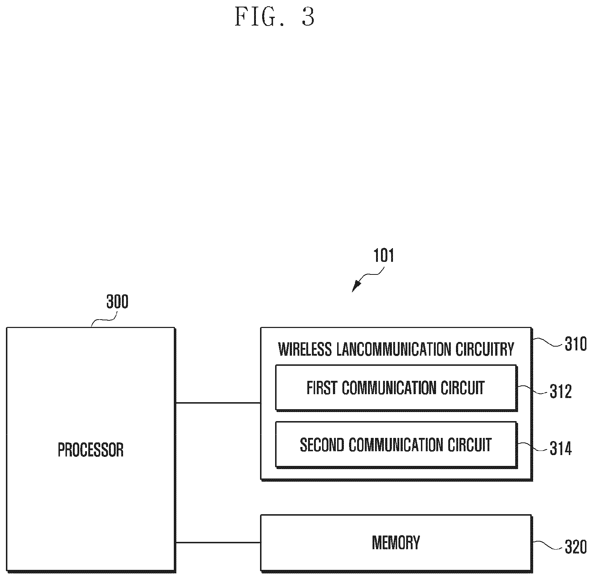

FIG. 3 is a block diagram of an electronic device for wireless LAN communication. The electronic device 101 of FIG. 3 may be at least partly similar to the electronic device 101 of FIG. 1 or FIG. 2, or may include other embodiments of the electronic device.

With reference to FIG. 3, the electronic device 101 may include a processor 300, wireless LAN communication circuitry 310, and/or memory 320. The processor 300 may be substantially the same as the processor 120 (e.g., the application processor and/or the communication processor) of FIG. 1, or may be included in the processor 120. The wireless LAN communication circuitry 310 may be substantially the same as the wireless communication module 192 of FIG. 1, or may be included in the wireless communication module 192. The memory 320 may be substantially the same as the memory 130 of FIG. 1, or may be included in the memory 130. The processor 300 may be operatively, functionally, and/or electrically connected to the wireless LAN communication circuitry 310 and/or the memory 320. For example, the processor 300 may include at least one processor including processing circuitry.

The wireless LAN communication circuitry 310 may transmit and/or receive data (or a packet) to and/or from at least one external electronic device (e.g., the external electronic device 220 of FIG. 2) via wireless LAN communication. For example, the wireless LAN communication circuitry 310 may include a first communication circuit 312 and/or a second communication circuit 314 that process a baseband signal for wireless LAN communication. For example, the first communication circuit 312 and the second communication circuit 314 may perform wireless LAN communication through different links (or frequency bands or at least partly different frequency bands). For example, the first communication circuit 312 may support a first frequency band (e.g., a band of about 2.4 GHz) and/or a second frequency band (e.g., a band of about 5 GHz). For example, the second communication circuit 314 may support the second frequency band (e.g., the band of about 5 GHz) and/or a third frequency band (e.g., a band of about 6 GHz). For example, the first communication circuit 312 and the second communication circuit 314 may be logically (e.g., in software) separated. For example, the first communication circuit 312 and the second communication circuit 314 may be configured as different circuits or different pieces of hardware.

The processor 300 may control the wireless LAN communication circuitry 310 to set up a plurality of links (e.g., the first link 231, the second link 232, and/or the third link 233 of FIG. 2) with the external electronic device (e.g., the external electronic device 220 of FIG. 2). For example, the processor 300 may control the wireless LAN communication circuitry 310 to set up the plurality of links with the external electronic device 220 through at least one link. For example, the processor 300 may obtain information related to an MLO of the external electronic device 220 from a beacon or probe response frame received from the external electronic device 220 through the first frequency band (or the first link 231). For example, the information related to the MLO may include information related to not only the first frequency band (or the first link 231) through which the beacon or probe response frame is received but also the second frequency band (or the second link 232) and/or the third frequency band (or the third link 233) supportable by the external electronic device 220 for the MLO. For example, the information related to the frequency band (or link) may include a basic service set identifier (BSSID) of each frequency band (or link) and/or a parameter related to the MLO. For example, the processor 300 may control the wireless LAN communication circuitry 310 to transmit an association request frame related to the plurality of links to the external electronic device 220 through at least one link, based on the information related to the MLO of the external electronic device 220. For example, the association request frame may include information related to setup of the first link 231, the second link 232, and/or the third link 233, and may include information related to a capability and/or an operational parameter of each link. For example, when obtaining information related to acceptance from the external electronic device 220 in response to the association request frame, the processor 300 may determine that the plurality of links with the external electronic device 220 has been set up. For example, when obtaining information related to rejection related to at least one of the plurality of links from the external electronic device 220 in response to the association request frame, the processor 300 may determine that the at least one link corresponding to the information related to the rejection among the plurality of links with the external electronic device 220 has failed to be set up. For example, the at least one link corresponding to the information related to the rejection may be excluded from setup of a link with the external electronic device 220.

When setting up the plurality of links with the external electronic device 220, the processor 300 may obtain an encryption key corresponding to each link from the external electronic device 220. The processor 300 may control the wireless LAN communication circuitry 310 to transmit and/or receive traffic to and/or from the external electronic device 220 in a broadcast mode and/or a multicast mode through each link by using the encryption key corresponding to each link. For example, the encryption key is a key for encrypting traffic transmitted and/or received in the broadcast mode and/or the multicast mode between the electronic device 101 and the external electronic device 220 with which the links for wireless LAN communication are set up, and may include a group temporal key (GTK).

The processor 300 may identify an encryption key update period of each of the plurality of links set up with the external electronic device 220. For example, the processor 300 may identify the encryption key update period of each link, based on an encryption key update history (e.g., information about a plurality of encryption key updates) of each link. For example, the processor 300 may obtain information related to the encryption key update period corresponding to each link from the external electronic device 220 (e.g., an AP). For example, the information related to the encryption key update period may include at least one of a time when the encryption key has been updated last or the encryption key update period. For example, the processor 300 may obtain the information related to the encryption key update period corresponding to each link set up between the electronic device 101 and the external electronic device 220 from at least one peripheral device (e.g., a STA) located within a specified distance from the electronic device 101.

The processor 300 may identify whether there is at least one link of which the encryption key update period arrives, based on the encryption key update periods of the plurality of links. For example, the processor 300 may identify whether there is at least one link of which the encryption key update period arrives within a specified time range from a time (or current time) of identifying whether the encryption key update period arrives.

When determining that there is at least one link of which the encryption key update period arrives, the processor 300 may identify (or select) at least one link to be used for updating an encryption key, based on a link quality of each of the plurality of links. For example, the processor 300 may select at least one candidate link from among the plurality of links, based on channel usage (e.g., channel utilization (CU)) and received signal strength of each link. For example, the received signal strength may include at least one of a received signal strength indicator (RSSI), a reference signal received quality (RSRQ), or a reference signal received power (RSRP). For example, the candidate link may include a link of which channel usage is a specified reference channel usage or less and of which received signal strength exceeds a specified reference strength.

For example, the processor 300 may select at least one candidate link from among the plurality of links, based on the channel usage and received signal strength of each link. The processor 300 may identify at least one link set combinable as at least one candidate link. The processor 300 may select any one link set as a candidate link set, based on a link quality of the at least one link set. The processor 300 may select at least one candidate link included in the candidate link set as a link to be used for updating an encryption key.

For example, when at least some of the at least one candidate link to be used for updating the encryption key operates in a low power mode, the processor 300 may switch at least one candidate link operating in the low power mode to an active mode.

For example, when identifying (or selecting) the at least one candidate link to be used for updating the encryption key, the processor 300 may restrict the at least one candidate link from switching to the low power mode until the encryption key of the at least one link is completely updated.

For example, when there is a candidate link (e.g., an unassociated link) that is not set up with the external electronic device 220 among the at least one candidate link to be used for updating the encryption key, the processor 300 may control the wireless LAN communication circuitry 310 to perform setup (e.g., re-association) of the candidate link that is not set up with the external electronic device 220.

When identifying (or selecting) the at least one candidate link to be used for updating the encryption key, the processor 300 may control the wireless LAN communication circuitry 310 to transmit information related to the at least one candidate link to the external electronic device 220. For example, the information related to the at least one candidate link may include information for requesting (or indicating) a switch of at least one remaining link except for the at least one candidate link to be used for updating the encryption key among the plurality of links to the low power mode. For example, the information related to the at least one candidate link may include information for requesting (or indicating) updating of the encryption key through the at least one candidate link to be used for updating the encryption key.

The processor 300 may obtain (or receive) information related to update of the encryption key of the at least one link from the external electronic device 220 through the at least one candidate link, based on transmission of the information related to the at least one candidate link. The processor 300 may update the encryption key of each of the at least one link of which the encryption key update period has arrived, based on the information related to the update of the encryption key.

When setting up a single link with the external electronic device 220, the processor 300 may identify an update period of the link set up with the external electronic device 220. When the encryption key update period arrives, the processor 300 may obtain information related to update of an encryption key from the external electronic device 220 by using the link set up with the external electronic device 220. The processor 300 may update the encryption key of the link set up with the external electronic device 220, based on the information related to the update of the encryption key. For example, when the link set up with the external electronic device 220 operates in the low power mode, the processor 300 may switch the link operating in the low power mode to the active mode. For example, the processor 300 may restrict the link set up with the external electronic device 220 from switching to the low power mode until the encryption key is completely updated.

The memory 320 may store various data used by at least one component (e.g., the processor 300 or the wireless LAN communication circuitry 310) of the electronic device 101. For example, the memory 320 may store various instructions individually or collectively executable by the processor 300 (e.g., at least one processor).

According to an embodiment, an electronic device (e.g., the electronic device 101 of FIG. 1, FIG. 2, or FIG. 3) may include communication circuitry (e.g., the wireless communication module 192 of FIG. 1 or the wireless LAN communication circuitry 310 of FIG. 2) supporting wireless LAN communication, at least one processor (e.g., the processor 120 of FIG. 1 or the processor 300 of FIG. 3) including processing circuitry, and memory (e.g., the memory 130 of FIG. 1 or the memory 320 of FIG. 3) storing instructions. According to an embodiment, the instructions which, when executed by the at least one processor individually or collectively, cause the electronic device to set up a plurality of links (e.g., the first link 231, the second link 232, and/or the third link 233 of FIG. 2) with an external electronic device (e.g., the external electronic device 220 of FIG. 2). According to an embodiment, the instructions, when executed by the at least one processor individually or collectively, cause the electronic device to identify an encryption key update period of each of the plurality of links. According to an embodiment, the instructions, when executed by the at least one processor individually or collectively, cause the electronic device to identify a link quality of each of the plurality of links when it is determined based on the encryption key update period of each of the plurality of links that at least one link for updating an encryption key exists. According to an embodiment, the instructions, when executed by the at least one processor individually or collectively, cause the electronic device to select at least one link to be used to update the encryption key from among the plurality of links, based on the link quality of each of the plurality of links. According to an embodiment, the instructions, when executed by the at least one processor individually or collectively, cause the electronic device to transmit information related to the selected at least one link to the external electronic device.

According to an embodiment, the instructions, when executed by the at least one processor individually or collectively, cause the electronic device to restrict the selected at least one link from switching to a low power mode until update of the encryption key of the at least one link for updating the encryption key is completed through the selected at least one link.

According to an embodiment, the instructions, when executed by the at least one processor individually or collectively, cause the electronic device to identify the encryption key update period of each of the plurality of links, based on an update history of the encryption key for each of the links.

According to an embodiment, the instructions, when executed by the at least one processor individually or collectively, cause the electronic device to obtain information related to the encryption key update period of each of the plurality of links from the external electronic device or a peripheral device located within a specified distance of the electronic device.

According to an embodiment, the instructions, when executed by the at least one processor individually or collectively, cause the electronic device to select at least one link of which at least one of a received signal strength or a channel usage rate satisfies a specified condition from among the plurality of links. According to an embodiment, the instructions, when executed by the at least one processor individually or collectively, cause the electronic device to identify a link quality of at least one link set combinable based on the at least one link satisfying the specified condition. According to an embodiment, the instructions, when executed by the at least one processor individually or collectively, cause the electronic device to select one link set from among the at least one link set, based on the link quality of the at least one link set. According to an embodiment, the instructions, when executed by the at least one processor individually or collectively, cause the electronic device to select at least one link included in the selected link set as a link to be used for updating the encryption key.

According to an embodiment, the instructions, when executed by the at least one processor individually or collectively, cause the electronic device to additionally set up a link for wireless LAN communication with the external electronic device when the selected link set includes the link not set up for wireless LAN communication with the external electronic device.

According to an embodiment, the instructions, when executed by the at least one processor individually or collectively, cause the electronic device to select at least one link to be used for updating the encryption key from among the at least one link included in the selected link set.

According to an embodiment, the instructions, when executed by the at least one processor individually or collectively, cause the electronic device to transmit information related to a switch of at least one remaining link except for the selected at least one link from among the plurality of links to a low power mode to the external electronic device.

According to an embodiment, the instructions, when executed by the at least one processor individually or collectively, cause the electronic device to transmit a message for requesting update of the encryption key through the selected at least one link to the external electronic device.

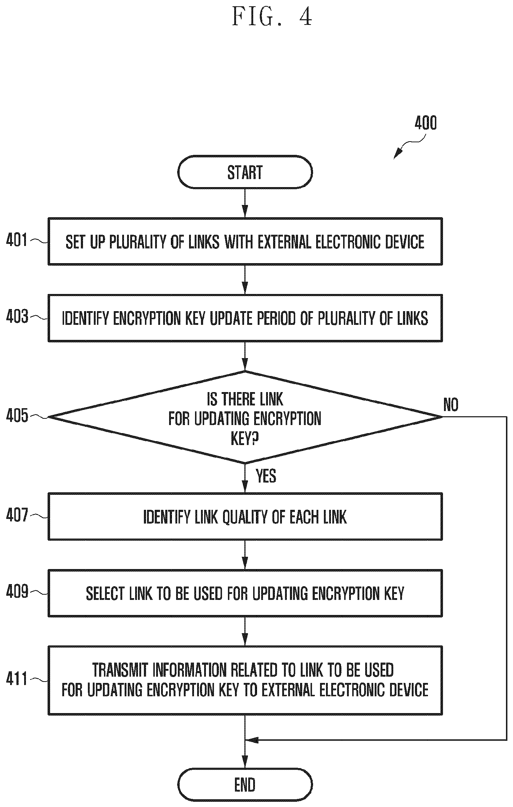

FIG. 4 is a flowchart 400 illustrating that an electronic device updates an encryption key. In the following, operations may be sequentially performed, but are not necessarily performed sequentially. For example, the operations may be performed in a different order, or at least two operations may be performed in parallel. For example, the electronic device of FIG. 4 may be the electronic device 101 of FIG. 1, FIG. 2, or FIG. 3.

With reference to FIG. 4, in operation 401, the electronic device (e.g., the electronic device 101 of FIG. 1, FIG. 2 or FIG. 3) or a processor (e.g., the processor 120 of FIG. 1 or the processor 300 of FIG. 3) may set up a plurality of links (e.g., the first link 231, the second link 232 and/or the third link 233 of FIG. 2) with an external electronic device (e.g., the external electronic device 220 of FIG. 2). For example, the processor 300 may set up the plurality of links with the external electronic device 220 through at least one frequency band (or link) among a plurality of frequency bands supported by the electronic device 101. For example, the processor 300 may obtain information related to links (e.g., a first frequency band (or the first link 231), a second frequency band (or the second link 232), and/or a third frequency band (or the third link 233)) supportable by the external electronic device 220 for an MLO from a beacon or probe response frame received from the external electronic device 220 through at least one frequency band (e.g., the first frequency band (or the first link 231)). For example, the information related to the links (or frequency bands) may include a BSSID of each link (or frequency band) and/or a parameter related to the MLO. For example, the processor 300 may control the wireless LAN communication circuitry 310 to transmit an association request frame related to the plurality of links to the external electronic device 220 through at least one link among the links supportable by the external electronic device 220 for the MLO. For example, the association request frame may include information related to setup of the first link 231, the second link 232, and/or the third link 233, and may include information related to a capability and/or an operational parameter of each link. For example, when obtaining information related to acceptance from the external electronic device 220 in response to the association request frame, the processor 300 may determine that the plurality of links with the external electronic device 220 has been set up. For example, when obtaining information related to rejection related to at least one of the plurality of links from the external electronic device 220 in response to the association request frame, the processor 300 may determine that the at least one link corresponding to the information related to the rejection among the plurality of links with the external electronic device 220 has failed to be set up.

For example, when setting up the plurality of links with the external electronic device 220, the processor 300 may obtain an encryption key corresponding to each link from the external electronic device 220. The processor 300 may control the wireless LAN communication circuitry 310 to transmit and/or receive traffic to and/or from the external electronic device 220 in a broadcast mode and/or a multicast mode through each link by using the encryption key corresponding to each link. For example, the encryption key is a key for encrypting traffic transmitted and/or received in the broadcast mode and/or the multicast mode between the electronic device 101 and the external electronic device 220 with which the links for wireless LAN communication are set up, and may include a group temporal key (GTK).

In operation 403, the electronic device (e.g., the electronic device 101) or the processor (e.g., the processor 120 or 300) may identify an encryption key update period of each of the plurality of links. For example, the processor 300 may identify the encryption key update period of each link, based on an encryption key update history (e.g., information about a plurality of encryption key updates) of each link. For example, the processor 300 may obtain information related to the encryption key update period corresponding to each link from the external electronic device 220 (e.g., an AP). For example, the information related to the encryption key update period may include at least one of a time when the encryption key has been updated last or the encryption key update period. For example, the processor 300 may obtain the information related to the encryption key update period corresponding to each link set up between the electronic device 101 and the external electronic device 220 from at least one peripheral device (e.g., a STA) located within a specified distance from the electronic device 101.

In operation 405, the electronic device (e.g., the electronic device 101) or the processor (e.g., the processor 120 or 300) may identify whether there is at least one link of which the encryption key update period arrives, based on the encryption key update periods of the plurality of links. For example, the processor 300 may identify whether there is at least one link of which the encryption key update period arrives within a specified time range from a time (or current time) of identifying whether the encryption key update period arrives.

When determining that there is not at least one link of which the encryption key update period arrives (e.g., No in operation 405), the electronic device (e.g., the electronic device 101) or the processor (e.g., the processor 120 or 300) may terminate updating the encryption key.

When determining that there is at least one link of which the encryption key update period arrives (e.g., Yes in operation 405), the electronic device (e.g., the electronic device 101) or the processor (e.g., the processor 120 or 300) identify a link quality of each of the plurality of links with the external electronic device 220 in operation 407. For example, the plurality of links with the external electronic device 220 may include a plurality of links set up with the external electronic device 220 and at least one link that may be additionally set up with the external electronic device 220. For example, the link quality may be calculated based on received signal strength and radio wave occupancy time (or channel usage rate) of each link according to Equation 1.

[Equation 1]

$$ETP(RSSI, Airtime\ fraction) = \frac{Airtime\ fraction}{255} \times Data\ rate$$

For example, ETP (RSSI, Airtime fraction) may denote a link quality according the wireless LAN communication between the electronic device 101 and the external electronic device 220 through a specific link, and Airtime fraction may denote radio wave occupancy time (or channel usage rate) of the specific link. For example, Data rate may denote a data transmission rate for the wireless LAN communication between the electronic device 101 and the external electronic device 220 through the specific link, and may be calculated by Equation 2.

[Equation 2]

$$DataRate = min(\log_2(1 + SNR_{tone}), MaxBitsPerSc) \times \frac{NSS\_max \times Ntone}{DSYM_{DUR}}$$

For example, MaxBitsPerSc may denote a value related to a modulation order for the wireless LAN communication between the electronic device 101 and the external electronic device 220 through the specific link, $DSYM_{DUR}$ may denote a processing time for a physical protocol data unit (PPDU) symbol, NSS_max may denote the maximum number of specific streams, and $SNR_{\_tone}$ may denote a value related to a received signal strength (e.g., an RSSI) for the wireless LAN communication between the electronic device 101 and the external electronic device 220 through the specific link, and may be calculated by Equation 3.

[Equation 3]

$$SNR_{tone} = 10^{\frac{RSSI + P_{adjust}}{10}}$$

For example, RSSI may denote a received signal strength according to the wireless LAN communication between the electronic device 101 and the external electronic device 220 through the specific link.

In operation 409, the electronic device (e.g., the electronic device 101) or the processor (e.g., the processor 120 or 300) may select at least one link to be used for updating an encryption key from among the plurality of links with the external electronic device 220, based on the quality of each link. For example, the processor 300 may select at least one candidate link from among the plurality of links, based on channel usage (e.g., channel utilization (CU)) and received signal strength of each link. For example, the received signal strength may include at least one of a received signal strength indicator (RSSI), a reference signal received quality (RSRQ), or a reference signal received power (RSRP). For example, the candidate link may include a link of which channel usage is a specified reference channel usage or less and of which received signal strength exceeds a specified reference strength.

For example, the processor 300 may select at least one candidate link from among the plurality of links, based on the channel usage and received signal strength of each link. The processor 300 may identify at least one link set combinable as at least one candidate link. The processor 300 may select any one link set as a candidate link set, based on a link quality of the at least one link set. The processor 300 may select at least one candidate link included in the candidate link set as a link to be used for updating an encryption key.

For example, when at least some of the at least one candidate link to be used for updating the encryption key operates in a low power mode, the processor 300 may switch at least one candidate link operating in the low power mode to an active mode.

For example, when identifying (or selecting) the at least one candidate link to be used for updating the encryption key, the processor 300 may restrict the at least one candidate link from switching to the low power mode until the encryption key of the at least one link is completely updated.

For example, when there is a candidate link (e.g., an unassociated link) that is not set up with the external electronic device 220 among the at least one candidate link to be used for updating the encryption key, the processor 300 may control the wireless LAN communication circuitry 310 to perform setup (e.g., re-association) of the candidate link that is not set up with the external electronic device 220.

In operation 411, the electronic device (e.g., the electronic device 101) or the processor (e.g., the processor 120 or 300) may transmit information related to the at least one candidate link to be used for updating the encryption key to the external electronic device 220. For example, the information related to the at least one candidate link may include information for requesting (or indicating) a switch of at least one remaining link except for the at least one candidate link to be used for updating the encryption key among the plurality of links to the low power mode. For example, the information related to the at least one candidate link may include information for requesting (or indicating) updating of the encryption key through the at least one candidate link to be used for updating the encryption key.

The electronic device (e.g., the electronic device 101) or the processor (e.g., the processor 120 or 300) may obtain (or receive) information related to update of the encryption key of the at least one link from the external electronic device 220 through the at least one candidate link, based on transmission of the information related to the at least one candidate link. The electronic device (e.g., the electronic device 101) or the processor (e.g., the processor 120 or 300) may update the encryption key of each of the at least one link of which the encryption key update period has arrived by decoding the information related to the update of the encryption key with a pairwise temporal key (PTK).

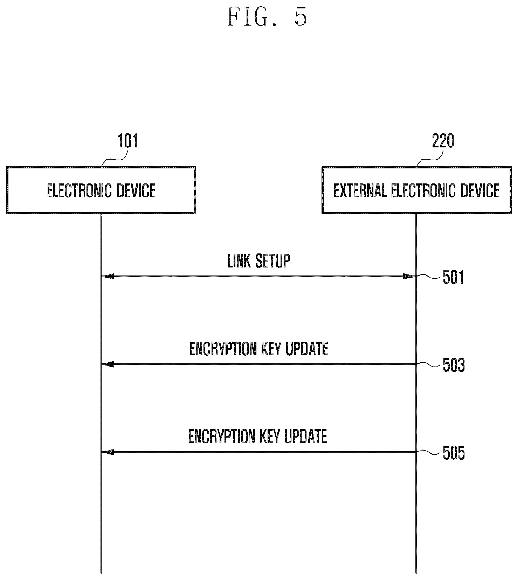

FIG. 5 illustrates an example in which an electronic device identifies an encryption key update period of each link.

With reference to FIG. 5, the electronic device 101 and an external electronic device 220 may set up a plurality of links for wireless LAN communication (operation 501). For example, when the electronic device 101 sets up the plurality of links with the external electronic device 220, the electronic device 101 may obtain an encryption key corresponding to each link from the external electronic device 220. The electronic device 101 may transmit and/or receive traffic to and/or from the external electronic device 220 in a broadcast mode and/or a multicast mode through each link by using the encryption key corresponding to each link. For example, the encryption key may include a group temporal key (GTK).

The external electronic device 220 may transmit information related to update of an encryption key to the electronic device 101 through at least one link, based on an encryption key update period of each link (operation 503). For example, the external electronic device 220 may transmit information related to update of the encryption key corresponding to each link to the electronic device 101 through each link. For example, the external electronic device 220 may transmit information related to update of an encryption key corresponding to at least one link of which the encryption key update period has arrived to the electronic device 101 through at least one link among the plurality of links.

The electronic device 101 may update the encryption key of the at least one link of which the encryption key update period has arrived, based on the information related to the update of the encryption key obtained from the external electronic device 220.

The external electronic device 220 may transmit information related to update of an encryption key to the electronic device 101 through at least one link, based on the encryption key update period of each link (operation 505).

The electronic device 101 may update an encryption key of at least one link of which the encryption key update period has arrived, based on the information related to the update of the encryption key obtained from the external electronic device 220. When updating an encryption key of a specific link at least twice, the electronic device 101 may identify an encryption key update period of the link.

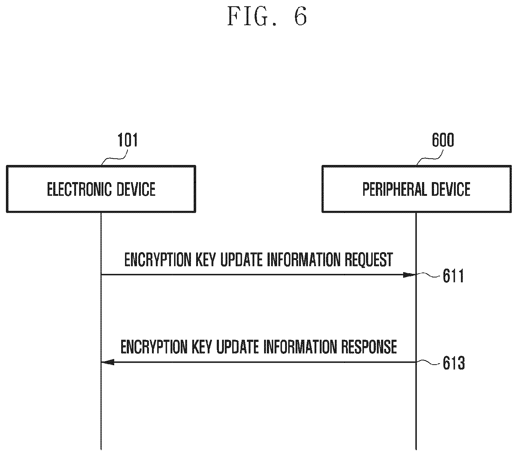

FIG. 6 illustrates an example in which an electronic device identifies an encryption key update period of each link.

With reference to FIG. 6, when the electronic device 101 sets up a plurality of links for wireless LAN communication with an external electronic device 220, the electronic device 101 may transmit a request message related to update of an encryption key to at least one peripheral device 600 (e.g., STA) located within a specified distance from the electronic device 101 (operation 611). For example, the request message related to the update of the encryption key may include information related to the plurality of links set up between the electronic device 101 and the external electronic device 220. For example, the request message related to the update of the encryption key may be transmitted through wireless LAN communication (e.g., a vendor specific action frame) or Bluetooth (or Bluetooth Low Energy (BLE)).

When receiving the request message related to the update of the encryption key from the electronic device 101, the at least one peripheral device 600 may identify whether there is information related to an encryption key update period corresponding to each of the plurality of links set up between the electronic device 101 and the external electronic device 220. When information related to an encryption key update period corresponding to at least one link exists (or is stored), the at least one peripheral device 600 may transmit the information related to the encryption key update period corresponding to the at least one link to the electronic device 101 (operation 613). For example, the information related to the encryption key update period may be transmitted via Bluetooth (or BLE). For example, the information related to the encryption key update period may be transmitted through a vendor specific action frame defined in wireless LAN communication illustrated below in Table 1.

[Table 1]

| category | organization identifier | vendor specific content |
|---|---|---|

For example, vendor specific content may include the information related to the encryption key update period. For example, the information related to the encryption key update period may include an encryption key update period of a specific link and information about a time when an encryption key of the specific link has been updated last.

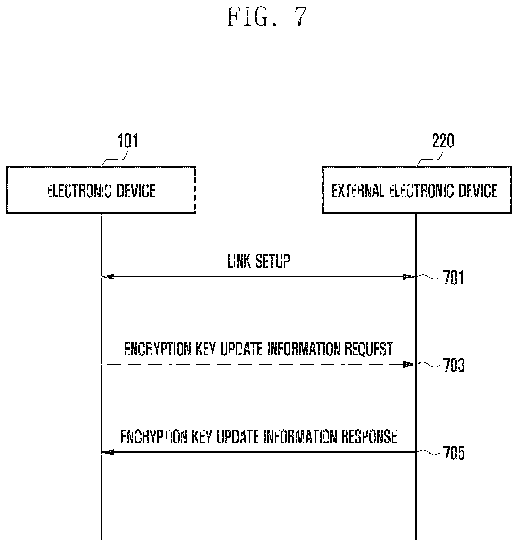

FIG. 7 illustrates an example in which an electronic device identifies an encryption key update period of each link.

With reference to FIG. 7, the electronic device 101 and an external electronic device 220 may set up a plurality of links for wireless LAN communication (operation 701). For example, when the electronic device 101 sets up the plurality of links with the external electronic device 220, the electronic device 101 may obtain an encryption key corresponding to each link from the external electronic device 220. The electronic device 101 may transmit and/or receive traffic to and/or from the external electronic device 220 in a broadcast mode and/or a multicast mode through each link by using the encryption key corresponding to each link. For example, the encryption key may include a group temporal key (GTK).

When the electronic device 101 sets up the plurality of links with the external electronic device 220, the electronic device 101 may transmit a request message related to update of an encryption key to the external electronic device 220 (operation 703). For example, the request message related to the update of the encryption key may be transmitted through wireless LAN communication (e.g., a vendor specific action frame) or Bluetooth (or BLE).

When receiving the request message related to the update of the encryption key from the electronic device 101, the external electronic device 220 may transmit information related to an encryption key update period corresponding to each of the plurality of links to the electronic device 101 (operation 705). For example, the information related to the encryption key update period may be transmitted through wireless LAN communication (e.g., a vendor specific action frame) or Bluetooth (or BLE). For example, the information related to the encryption key update period may include an encryption key update period of a specific link and information about a time when an encryption key of the specific link has been updated last.

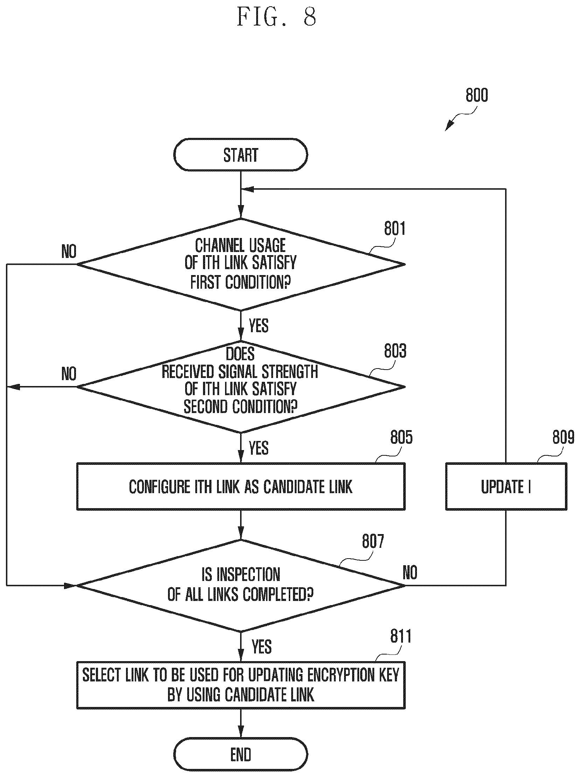

FIG. 8 is a flowchart 800 illustrating that an electronic device selects a link for updating an encryption key. For example, at least part of FIG. 8 may include a detailed description of operation 409 to operation 411 of FIG. 4. In the following, operations may be sequentially performed, but are not necessarily performed sequentially. For example, the operations may be performed in a different order, or at least two operations may be performed in parallel. For example, the electronic device of FIG. 8 may be the electronic device 101 of FIG. 1, FIG. 2, or FIG. 3.

With reference to FIG. 8, when identifying quality of a plurality of links set up with an external electronic device 220 (e.g., operation 407 of FIG. 4), the electronic device (e.g., the electronic device 101 of FIG. 1, FIG. 2, or FIG. 3) or a processor (e.g., the processor 120 of FIG. 1 or the processor 300 of FIG. 3) may identify whether channel usage of an ith link among the plurality of links (e.g., the first link 231, the second link 232, and/or the third link 233 of FIG. 2) with the external electronic device (e.g., the external electronic device 220 of FIG. 2) satisfies a specified first condition in operation 801. For example, when the channel usage of the ith link is a specified reference channel usage or less, the processor 300 may determine that the specified first condition is satisfied. When the channel usage of the ith link exceeds the specified reference channel usage, the processor 300 may determine that the specified first condition is not satisfied. For example, i is an index indicating a plurality of links that may be set up between the electronic device 101 and the external electronic device 220, and may include an initial value of 1 (or 0).

When determining that the channel usage of the ith link does not satisfy the specified first condition (No in operation 801), the electronic device (e.g., the electronic device 101) or the processor (e.g., the processor 120 or 300) may perform operation 807.

When determining that the channel usage of the ith link satisfies the specified first condition (Yes in operation 801), the electronic device (e.g., the electronic device 101) or the processor (e.g., the processor 120 or 300) may identify whether received signal strength of the ith link satisfies a specified second condition in operation 803. For example, when the received signal strength of the ith link exceeds a specified reference strength, the processor 300 may determine that the specified second condition is satisfied. When the received signal strength of the ith link is the specified reference strength or less, the processor 300 may determine that the specified second condition is not satisfied. For example, the received signal strength may include at least one of a received signal strength indicator (RSSI), a reference signal received quality (RSRQ), or a reference signal received power (RSRP).

When determining that the received signal strength of the ith link satisfies the specified second condition (Yes in operation 803), the electronic device (e.g., the electronic device 101) or the processor (e.g., the processor 120 or 300) may configure the ith link as a candidate link in operation 805.

When determining that the received signal strength of the ith link does not satisfy the specified second condition (No in operation 803), the electronic device (e.g., the electronic device 101) or the processor (e.g., the processor 120 or 300) may perform operation 807.

In operation 807, the electronic device (e.g., the electronic device 101) or the processor (e.g., the processor 120 or 300) may identify whether it is identified whether the specified first condition and the specified second condition are satisfied with respect to all links that may be set up between the electronic device 101 and the external electronic device 220. For example, the processor 300 may identify whether i is equal to or greater than the number ($i_{MAX}$) of all links that may be set up between the electronic device 101 and the external electronic device 220.

When not identifying whether the specified first condition and the specified second condition are satisfied with respect to all links that may be set up between the electronic device 101 and the external electronic device 220 (e.g., $i <$ $i_{MAX}$) (e.g., No in operation 807), the electronic device (e.g., the electronic device 101) or the processor (e.g., the processor 120 or 300) may update the index (i) of the links (e.g., i++) in operation 809. For example, the processor 300 may perform operation 801 to operation 807 corresponding to the updated i-th link.

When identifying whether the specified first condition and the specified second condition are satisfied with respect to all links that may be set up between the electronic device 101 and the external electronic device 220 (e.g., $i \geq$ $i_{MAX}$) (e.g., Yes in operation 807), the electronic device (e.g., the electronic device 101) or the processor (e.g., the processor 120 or 300) may select a link to be used for updating an encryption key from among at least one candidate link in operation 811. For example, the processor 300 may select at least one candidate link as a link to be used for updating an encryption key. For example, the processor 300 may identify at least one link set combinable as at least one candidate link. The processor 300 may select any one link set as a candidate link set, based on a link quality of the at least one link set. The processor 300 may select at least one candidate link included in the selected candidate link set as a link to be used for updating an encryption key.

The electronic device 101 may configure a candidate link in view of at least one of the channel utilization rate or the received signal strength of each of the plurality of links. For example, the electronic device 101 may configure at least one link of which the channel utilization rate satisfies the specified first condition among the plurality of links as a candidate link. For example, the electronic device 101 may configure at least one link of which the received signal strength satisfies the specified second condition among the plurality of links as a candidate link.

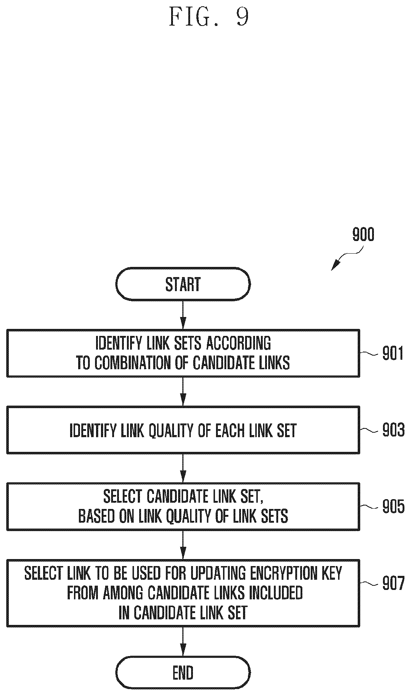

FIG. 9 is a flowchart 900 illustrating that an electronic device selects a link for updating an encryption key in view of a combination of candidate links. At least part of FIG. 9 may include a detailed description of operation 811 of FIG. 8. In the following, operations may be sequentially performed, but are not necessarily performed sequentially. For example, the operations may be performed in a different order, or at least two operations may be performed in parallel. For example, the electronic device of FIG. 9 may be the electronic device 101 of FIG. 1, FIG. 2, or FIG. 3.

With reference to FIG. 9, when configuring (or selecting) at least one candidate link, based on a specified first condition and a specified second condition (e.g., operation 805 and Yes in operation 807 of FIG. 8), the electronic device (e.g., the electronic device 101 of FIG. 1, FIG. 2, or FIG. 3) or a processor (e.g., the processor 120 of FIG. 1 or the processor 300 of FIG. 3) may identify combinable link sets of the at least one candidate link in operation 901. For example, when selecting the first link 231, the second link 232 and the third link 233 of FIG. 2 as candidate links, the processor 300 may configure a link set as illustrated in Table 2.

[Table 2]

|  | Link set |
|---|---|
| 1 | First link + second link + third link |
| 2 | First link + second link |
| 3 | First link + third link |
| 4 | Second link + third link |
| 5 | First link |
| 6 | Second link |
| 7 | Third link |

In operation 903, the electronic device (e.g., the electronic device 101) or the processor (e.g., the processor 120 or 300) may identify a link quality of each link set. For example, the link quality of the link set may be calculated based on the sum of qualities of at least one link included in the link set.

In operation 905, the electronic device (e.g., the electronic device 101) or the processor (e.g., the processor 120 or 300) may select any one of the at least one link set as a candidate link set, based on the link quality of the link set. For example, the candidate link set may include a link set having the highest link quality among the at least one link set.

In operation 907, the electronic device (e.g., the electronic device 101) or the processor (e.g., the processor 120 or 300) may select a link to be used for updating an encryption key, based on at least one candidate link included in the candidate link set. For example, the processor 300 may select at least some of the at least one candidate link included in the candidate link set as a link to be used for updating an encryption key. For example, the link to be used for updating the encryption key may be selected based on at least one of a channel utilization rate, a received signal strength, or a link quality.

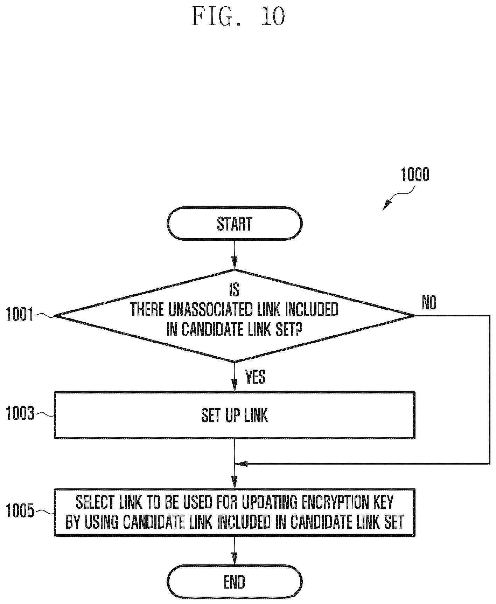

FIG. 10 is a flowchart 1000 illustrating that an electronic device sets up a candidate link. For example, at least part of FIG. 10 may include a detailed description of operation 907 of FIG. 9. In the following, operations may be sequentially performed, but are not necessarily performed sequentially. For example, the operations may be performed in a different order, or at least two operations may be performed in parallel. For example, the electronic device of FIG. 10 may be the electronic device 101 of FIG. 1, FIG. 2, or FIG. 3.

With reference to FIG. 10, when selecting a candidate link set (e.g., operation 905 of FIG. 9), the electronic device (e.g., the electronic device 101 of FIG. 1, FIG. 2, or FIG. 3) or a processor (e.g., the processor 120 of FIG. 1 or the processor 300 of FIG. 3) may identify whether there is a candidate link that is not set up with an external electronic device 220 (or an unestablished link) (e.g., an unassociated link) among at least one candidate included in the candidate link set in operation 1001.

When there is no candidate link that is not set up with the external electronic device 220 (e.g., No in operation 1001), the electronic device (e.g., the electronic device 101) or the processor (e.g., the processor 120 or 300) may perform operation 1005.

When there is a candidate link that is not set up with the external electronic device 220 (e.g., Yes in operation 1001), the electronic device (e.g., the electronic device 101) or the processor (e.g., the processor 120 or 300) may set up the candidate link that is not set up with the external electronic device 220 in operation 1003. For example, the processor 300 may obtain information related to the candidate link that is not set up with the external electronic device 220 from a beacon or probe response frame received from the external electronic device 220 through at least one frequency band (e.g., the first frequency band (or the first link 231)). For example, the information related to the link may include a BSSID of the candidate link not set up with the external electronic device 220 and/or a parameter related to an MLO. For example, the processor 300 may control the wireless LAN communication circuitry 310 to transmit an association request frame related to the candidate link not set up with the external electronic device 220 to the external electronic device 220 through at least one link among links supportable by the external electronic device 220 for the MLO. For example, the association request frame may include information related to a capability and/or an operational parameter of the candidate link not set up with the external electronic device 220. For example, when obtaining information related to acceptance from the external electronic device 220 in response to the association request frame, the processor 300 may determine that the candidate link not set up with the external electronic device 220 has been set up.

In operation 1005, the electronic device (e.g., the electronic device 101) or the processor (e.g., the processor 120 or 300) may select a link to be used for updating an encryption key, based on the at least one candidate link included in the candidate link set. For example, the processor 300 may select at least some of the at least one candidate link included in the candidate link set as a link to be used for updating an encryption key. For example, the link to be used for updating the encryption key may be selected based on at least one of a channel utilization rate, a received signal strength, or a link quality.

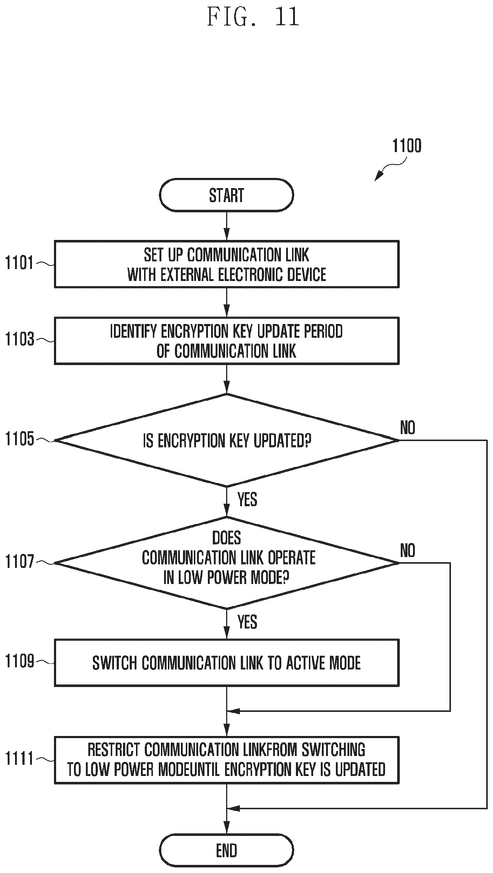

FIG. 11 is a flowchart 1100 illustrating that an electronic device updates an encryption key. In the following, operations may be sequentially performed, but are not necessarily performed sequentially. For example, the operations may be performed in a different order, or at least two operations may be performed in parallel. For example, the electronic device of FIG. 11 may be the electronic device 101 of FIG. 1, FIG. 2, or FIG. 3.

With reference to FIG. 11, in operation 1101, the electronic device (e.g., the electronic device 101 of FIG. 1, FIG. 2, or FIG. 3) or a processor (e.g., the processor 120 of FIG. 1 or the processor 300 of FIG. 3) may set up a link (or a single link) for wireless LAN communication with an external electronic device (e.g., the external electronic device 220 of FIG. 2).

For example, when setting up the link with the external electronic device 220, the processor 300 may obtain an encryption key corresponding to the link for wireless LAN communication from the external electronic device 220. The processor 300 may control the wireless LAN communication circuitry 310 to transmit and/or receive traffic to and/or from the external electronic device 220 in a broadcast mode and/or a multicast mode by using the encryption key corresponding to the link for wireless LAN communication with the external electronic device 220. For example, the encryption key may include a group temporal key (GTK).

In operation 1103, the electronic device (e.g., the electronic device 101) or the processor (e.g., the processor 120 or 300) may identify an encryption key update period of the link for wireless LAN communication with the external electronic device 220. For example, the processor 300 may identify the encryption key update period of the link for wireless LAN communication with the external electronic device 220 through a plurality of times of encryption key updates. For example, the processor 300 may obtain information related to the encryption key update period corresponding to the link for wireless LAN communication from the external electronic device 220 (e.g., an AP). For example, the information related to the encryption key update period may include at least one of a time when the encryption key has been updated last or the encryption key update period. For example, the processor 300 may obtain the information related to the encryption key update period corresponding to the link set up between the electronic device 101 and the external electronic device 220 from at least one peripheral device (e.g., a STA) located within a specified distance from the electronic device 101.

In operation 1105, the electronic device (e.g., the electronic device 101) or the processor (e.g., the processor 120 or 300) may identify whether the encryption key update period of the link for wireless LAN communication with the external electronic device 220 arrives. For example, the processor 300 may identify whether the encryption key update period of the link for wireless LAN communication with the external electronic device 220 is included within a specified time range from a time (or current time) of identifying whether the encryption key update period arrives.

When the encryption key update period has not arrived (e.g., No in operation 1105), the electronic device (e.g., the electronic device 101) or the processor (e.g., the processor 120 or 300) may terminate updating the encryption key.

When the encryption key update period has arrived (e.g., Yes in operation 1105), the electronic device (e.g., the electronic device 101) or the processor (e.g., the processor 120 or 300) may identify whether the link for wireless LAN communication with the external electronic device 220 operates in a low power mode in operation 1107.

When the link for wireless LAN communication with the external electronic device 220 operates in the low power mode (e.g., Yes in operation 1107), the electronic device (e.g., the electronic device 101) or the processor (e.g., the processor 120 or 300) may switch the link for wireless LAN communication with the external electronic device 220 to an active mode in operation 1109. For example, when the link for wireless LAN communication with the external electronic device 220 is switched to the active mode, the processor 300 may control the wireless LAN communication circuitry 310 to transmit a null data frame with a PM bit configured to a specified first value (e.g., 0) to the external electronic device 220.

In operation 1111, the electronic device (e.g., the electronic device 101) or the processor (e.g., the processor 120 or 300) may restrict the link for wireless LAN communication with the external electronic device 220 from switching to the low power mode until the encryption key of the link is completely updated.

When the link for wireless LAN communication with the external electronic device 220 is not operating in the low power mode (e.g., No in operation 1107), the electronic device (e.g., the electronic device 101) or the processor (e.g., the processor 120 or 300) may restrict the link for wireless LAN communication with the external electronic device 220 from switching to the low power mode until the encryption key of the link is completely updated in operation 1111.

The electronic device (e.g., the electronic device 101) or the processor (e.g., the processor 120 or 300) may obtain (or receive) information related to update of the encryption key from the external electronic device 220 through the link for wireless LAN communication with the external electronic device 220 operating in the active mode. The electronic device (e.g., the electronic device 101) or the processor (e.g., the processor 120 or 300) may update the encryption key of the link for wireless LAN communication with the external electronic device 220, based on the information related to the update of the encryption key.

When having updated the encryption key of the link for wireless LAN communication with the external electronic device 220, the electronic device (e.g., the electronic device 101) or the processor (e.g., the processor 120 or 300) may allow the encryption key of the link for wireless LAN communication with the external electronic device 220 to switch to the low power mode.

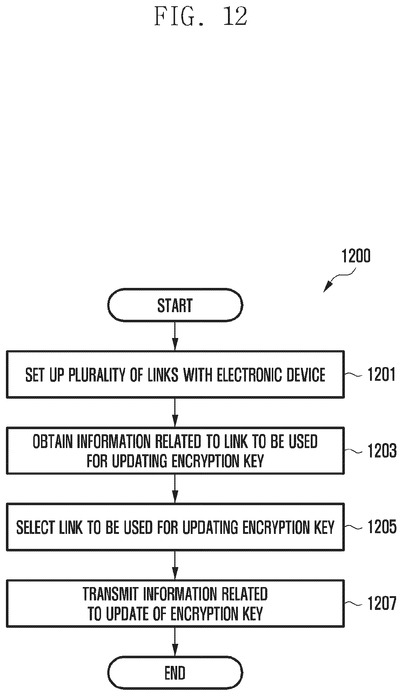

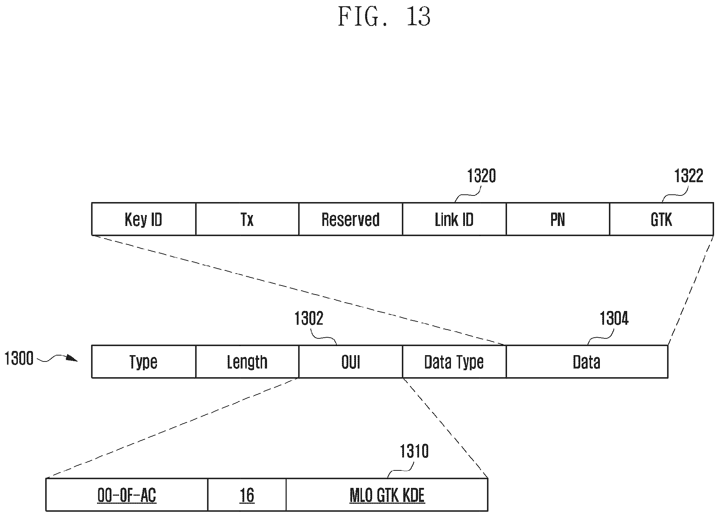

FIG. 12 is a flowchart 1200 illustrating that an external electronic device updates an encryption key of an electronic device. In the following, operations may be sequentially performed, but are not necessarily performed sequentially. For example, the operations may be performed in a different order, or at least two operations may be performed in parallel. For example, the external electronic device of FIG. 12 may be the external electronic device 220 of FIG. 2. For example, at least part of FIG. 12 may be described with reference to FIG. 13. FIG. 13 illustrates an example in which an external electronic device transmits information related to update of an encryption key.

With reference to FIG. 12 and FIG. 13, in operation 1201, the external electronic device (e.g., the external electronic device 220 of FIG. 2) may set up a plurality of links (e.g., the first link 231, the second link 232, and/or the third link 233 of FIG. 2) with the electronic device (e.g., the electronic device 101 of FIG. 1, FIG. 2, or FIG. 3).

For example, when setting up the plurality of links with the electronic device 101, the external electronic device 220 may transmit (or provide) an encryption key corresponding to each link to the electronic device 101. The external electronic device 220 may transmit and/or receive traffic to and/or from the electronic device 101 in a broadcast mode and/or a multicast mode through each link by using the encryption key corresponding to each link. For example, the encryption key may include a group temporal key (GTK).

In operation 1203, the external electronic device (e.g., the external electronic device 220) may obtain information related to at least one link to be used for updating an encryption key from the electronic device 101. For example, the information related to the at least one link may include information for requesting (or indicating) a switch of at least one remaining link except for at least one candidate link to be used for updating the encryption key among the plurality of links to a low power mode. For example, the information related to the at least one link may include information for requesting (or indicating) updating of an encryption key through the at least one candidate link to be used for updating the encryption key.

In operation 1205, the external electronic device (e.g., the external electronic device 220) may select at least one link to be used for updating the encryption key of the electronic device 101, based on the information related to the at least one link. For example, the external electronic device 220 may determine that the at least one remaining link among the plurality of links with the electronic device 101 has been switched to the low power mode, based on the information related to the at least one link received from the electronic device 101. The external electronic device 220 may select at least some of at least one link determined as operating in an active mode among the plurality of links with the electronic device 101 as the at least one link to be used for updating the encryption key. For example, the at least one link determined as operating in the active mode may include at least one link except for the at least one remaining link determined as having switched to the low power mode among the plurality of links.

For example, the external electronic device 220 may identify at least one link selected by the electronic device 101 to update the encryption key, based on the information related to the at least one link received from the electronic device 101. The external electronic device 220 may select at least some of the at least one link selected by the electronic device 101 to update the encryption key as at least one link to be used for updating the encryption key.

In operation 1207, the external electronic device (e.g., the external electronic device 220) may transmit information related to update of the encryption key of the electronic device 101 through the at least one link to be used for updating the encryption key.

For example, the external electronic device 220 may transmit information related to update of an encryption key corresponding to at least one link of which an encryption key update time arrives to the electronic device 101 through a frame 1300 in a key data encapsulation (KDE) format of FIG. 13. For example, the frame 1300 in the KDE format may indicate that the frame 1300 in the KDE format includes information related to update of the encryption keys of the plurality of links through an MLO GTK KDE 1310 included in an organizationally unique identifiers (OUI) field 1302. For example, the frame 1300 in the KDE format may include a new encryption key corresponding to each of at least one link of which the encryption key update time arrives among the plurality of links through a Link ID field 1320 and a GTK field 1322 of a data field 1304.

According to an embodiment, an operating method of an electronic device (e.g., the electronic device 101 of FIG. 1, FIG. 2, or FIG. 3) may include setting up a plurality of links (e.g., the first link 231, the second link 232, and/or the third link 233 of FIG. 2) with an external electronic device (e.g., the external electronic device 220 of FIG. 2) via wireless LAN communication. According to an embodiment, the operating method of the electronic device may include identifying an encryption key update period of each of the plurality of links. According to an embodiment, the operating method of the electronic device may include identifying a link quality of each of the plurality of links when it is determined based on the encryption key update period of each of the plurality of links that at least one link for updating an encryption key exists. According to an embodiment, the operating method of the electronic device may include selecting at least one link to be used to update the encryption key from among the plurality of links, based on the link quality of each of the plurality of links. According to an embodiment, the operating method of the electronic device may include transmitting information related to the selected at least one link to the external electronic device.

According to an embodiment, the operating method of the electronic device may include restricting the selected at least one link from switching to a low power mode until update of the encryption key of the at least one link for updating the encryption key is completed through the selected at least one link.

According to an embodiment, the identifying of the encryption key update period may include identifying the encryption key update period of each of the plurality of links, based on an update history of the encryption key for each of the links.

According to an embodiment, the identifying of the encryption key update period may include obtaining information related to the encryption key update period of each of the plurality of links from the external electronic device or a peripheral device located within a specified distance of the electronic device.

According to an embodiment, the selecting of the at least one link may include selecting at least one link of which at least one of a received signal strength or a channel usage rate satisfies a specified condition from among the plurality of links. According to an embodiment, the selecting of the at least one link may include identifying a link quality of at least one link set combinable based on the at least one link satisfying the specified condition. According to an embodiment, the selecting of the at least one link may include selecting one link set from among the at least one link set, based on the link quality of the at least one link set. According to an embodiment, the selecting of the at least one link may include selecting at least one link included in the selected link set as a link to be used for updating the encryption key.

According to an embodiment, the operation method of the electronic device may include additionally setting up a link for wireless LAN communication with the external electronic device when the selected link set includes the link not set up for wireless LAN communication with the external electronic device.

According to an embodiment, the operation method of the electronic device may include selecting at least one link to be used for updating the encryption key from among the at least one link included in the selected link set.

According to an embodiment, the transmitting of the information related to the selected at least one link may include transmitting information related to a switch of at least one remaining link except for the selected at least one link from among the plurality of links to a low power mode to the external electronic device.

According to an embodiment, the transmitting of the information related to the selected at least one link may include transmitting a message for requesting update of the encryption key through the selected at least one link to the external electronic device.

According to an embodiment, a non-transitory computer-readable recording medium (or computer program product) storing one or more programs may be described. According to an embodiment, the one or more programs may include an instruction which, when executed by at least one processor of an electronic device (e.g., the electronic device 101 of FIG. 1, FIG. 2, or FIG. 3), causes the electronic device to perform an operation of setting up a plurality of links (e.g., the first link 231, the second link 232, and/or the third link 233 of FIG. 2) with an external electronic device (e.g., the external electronic device 220 of FIG. 2) via wireless LAN communication, an operation of identifying an encryption key update period of each of the plurality of links, an operation of identifying a link quality of each of the plurality of links when it is determined based on the encryption key update period of each of the plurality of links that at least one link for updating an encryption key exists, an operation of selecting at least one link to be used to update the encryption key from among the plurality of links, based on the link quality of each of the plurality of links, and an operation of transmitting information related to the selected at least one link to the external electronic device.

Embodiments disclosed in the specification and drawings are only intended to provide specific examples for easily describing the technical content and for assisting understanding of the disclosure, and are not intended to limit the scope of the embodiments.

**Claims**

1.  An electronic device (101) comprising:

    communication circuitry (310) for wireless LAN communication;
    at least one processor (300) comprising processing circuitry; and
    memory (320) storing instructions,
    wherein the instructions, when executed by the at least one processor (300) individually or collectively, cause the electronic device (101) to:

    set up a plurality of links (231, 232, 233) with an external electronic device (220) via the communication circuitry (310),
    identify an encryption key update period of each of the plurality of links (231, 232, 233),
    identify a link quality of each of the plurality of links (231, 232, 233) in case that it is determined based on the encryption key update period of each of the plurality of links (231, 232, 233) that at least one link for updating an encryption key exists,
    select at least one link to be used to update the encryption key from among the plurality of links (231, 232, 233), based on the link quality of each of the plurality of links (231, 232, 233), and
    transmit information related to the selected at least one link to the external electronic device (220) via the communication circuitry (310).

2.  The electronic device of claim 1, wherein the instructions, when executed by the at least one processor (300) individually or collectively, cause the electronic device (101) to restrict the selected at least one link from switching to a low power mode until update of the encryption key of the at least one link to be used to update the encryption key is completed.

3.  The electronic device of claim 1 or 2, wherein the instructions, when executed by the at least one processor (300) individually or collectively, cause the electronic device (101) to identify the encryption key update period of each of the plurality of links, based on an update history of the encryption key for each of the links.

4.  The electronic device of claim 1 or 2, wherein the instructions, when executed by the at least one processor (300) individually or collectively, cause the electronic device (101) to obtain information related to the encryption key update period of each of the plurality of links from the external electronic device (220) or a peripheral device (600) located within a specified distance of the electronic device.

5.  The electronic device of any one of claims 1 to 4, wherein the instructions, when executed by the at least one processor (300) individually or collectively, cause the electronic device (101) to:

    select at least one link of which at least one of a received signal strength or a channel usage rate satisfies a specified condition from among the plurality of links;
    identify a link quality of at least one link set combinable based on the at least one link satisfying the specified condition;
    select one link set from among the at least one link set, based on the link quality of the at least one link set; and
    select at least one link included in the selected link set as a link to be used for updating the encryption key.

6.  The electronic device of claim 5, wherein the instructions, when executed by the at least one processor (300) individually or collectively, cause the electronic device (101) to additionally set up a link for wireless LAN communication with the external electronic device 220 in the case that the selected link set comprises a link that is not set up for wireless LAN communication with the external electronic device 220.

7. The electronic device of claim 5, wherein the instructions, when executed by the at least one processor (300) individually or collectively, cause the electronic device (101) to select some of the at least one link included in the selected link set as at least one link to be used for updating the encryption key.

8. The electronic device of any one of claims 1 to 7, wherein the instructions, when executed by the at least one processor (300) individually or collectively, cause the electronic device (101) to transmit information, related to a switch of at least one remaining link except for the selected at least one link from among the plurality of links to a low power mode, to the external electronic device (220).

9. An operating method of an electronic device (101), the method comprising:

setting up a plurality of links (231, 232, 233) with an external electronic device (220) via wireless LAN communication;
identifying an encryption key update period of each of the plurality of links (231, 232, 233);
identifying a link quality of each of the plurality of links (231, 232, 233) in the case that it is determined based on the encryption key update period of each of the plurality of links (231, 232, 233) that at least one link for updating an encryption key exists;
selecting at least one link to be used to update the encryption key from among the plurality of links (231, 232, 233), based on the link quality of each of the plurality of links (231, 232, 233); and
transmitting information related to the selected at least one link to the external electronic device (220).

10. The method of claim 9, further comprising restricting the selected at least one link from switching to a low power mode until update of the encryption key of the at least one link to be used to update the encryption key is completed.

11. The method of claim 9 or 10, wherein the identifying of the encryption key update period comprises identifying the encryption key update period of each of the plurality of links, based on an update history of the encryption key for each of the links.

12. The method of claim 9 or 10, wherein the identifying of the encryption key update period comprises obtaining information related to the encryption key update period of each of the plurality of links from the external electronic device (220) or a peripheral device (600) located within a specified distance of the electronic device.

13. The method of any one of claims 9 to 12, wherein the selecting of the at least one link comprises:

selecting at least one link of which at least one of a received signal strength or a channel usage rate satisfies a specified condition from among the plurality of links;
identifying a link quality of at least one link set combinable based on the at least one link satisfying the specified condition;
selecting one link set from among the at least one link set, based on the link quality of the at least one link set; and
selecting at least one link included in the selected link set as a link to be used for updating the encryption key.

14. The method of claim 13, further comprising additionally setting up a link for wireless LAN communication with the external electronic device (220) in the case that the selected link set comprises a link that is not set up for wireless LAN communication with the external electronic device (220).

15. The method of claim 13, further comprising selecting some of the at least one link included in the selected link set as at least one link to be used for updating the encryption key.

# FIG. 1

ELECTRONIC DEVICE 101

INPUT MODULE 150

SOUND OUTPUT MODULE 155

DISPLAY MODULE 160

BATTERY 189

POWER MANAGEMENT MODULE 188

PROCESSOR 120
MAIN PROCESSOR 121
AUXILIARY PROCESSOR 123

MEMORY 130
VOLATILE MEMORY 132
NON-VOLATILE MEMORY 134
INTERNAL MEMORY 136
EXTERNAL MEMORY 138

COMMUNICATION MODULE 190
WIRELESS COMMUNICATION MODULE 192
WIRED COMMUNICATION MODULE 194

SUBSCRIBER IDENTIFICATION MODULE 196
ANTENNA MODULE 197

AUDIO MODULE 170

SENSOR MODULE 176

INTERFACE 177

CONNECTION TERMINAL 178

HAPTIC MODULE 179

CAMERA MODULE 180

100

PROGRAM 140
APPLICATION 146
MIDDLEWARE 144
OPERATING SYSTEM 142

SECOND NETWORK 199

ELECTRONIC DEVICE 104

FIRST NETWORK 198

ELECTRONIC DEVICE 102

SERVER 108

EP 4 761 309 A1

FIG. 2

FIG. 3

101

300

WIRELESS LANCOMMUNICATION CIRCUITRY — 310

FIRST COMMUNICATION CIRCUIT — 312

SECOND COMMUNICATION CIRCUIT — 314

PROCESSOR

MEMORY — 320

# FIG. 4

400

```
        ┌─────────────┐
        │    START    │
        └─────────────┘
               │
               ▼
401 ─┤ SET UP PLURALITY OF LINKS WITH EXTERNAL ELECTRONIC DEVICE │
               │
               ▼
403 ─┤ IDENTIFY ENCRYPTION KEY UPDATE PERIOD OF PLURALITY OF LINKS │
               │
               ▼
405 ─◇   IS THERE LINK
        FOR UPDATING ENCRYPTION  ◇──── NO ────┐
               KEY?                           │
               │ YES                          │
               ▼                              │
407 ─┤ IDENTIFY LINK QUALITY OF EACH LINK │   │
               │                              │
               ▼                              │
409 ─┤ SELECT LINK TO BE USED FOR UPDATING ENCRYPTION KEY │  │
               │                              │
               ▼                              │
411 ─┤ TRANSMIT INFORMATION RELATED TO LINK TO BE USED       │  │
     │ FOR UPDATING ENCRYPTION KEY TO EXTERNAL ELECTRONIC DEVICE │ │
               │                              │
               ▼◄─────────────────────────────┘
        ┌─────────────┐
        │     END     │
        └─────────────┘
```

FIG. 5

FIG. 6

| 101 | | 600 |
|---|---|---|
| ELECTRONIC DEVICE | | PERIPHERAL DEVICE |

ENCRYPTION KEY UPDATE INFORMATION REQUEST ~611

ENCRYPTION KEY UPDATE INFORMATION RESPONSE ~613

FIG. 7

FIG. 8

*Flowchart 800:*

START

801 — CHANNEL USAGE OF ITH LINK SATISFY FIRST CONDITION? → NO / YES

803 — DOES RECEIVED SIGNAL STRENGTH OF ITH LINK SATISFY SECOND CONDITION? → NO / YES

805 — CONFIGURE ITH LINK AS CANDIDATE LINK

809 — UPDATE I

807 — IS INSPECTION OF ALL LINKS COMPLETED? → NO / YES

811 — SELECT LINK TO BE USED FOR UPDATING ENCRYPTION KEY BY USING CANDIDATE LINK

END

# FIG. 9

900

```
           ┌─────────────┐
           │    START    │
           └─────────────┘
                  │
  ┌───────────────────────────────────────┐
  │       IDENTIFY LINK SETS ACCORDING      │ ~ 901
  │    TO COMBINATION OF CANDIDATE LINKS    │
  └───────────────────────────────────────┘
                  │
  ┌───────────────────────────────────────┐
  │      IDENTIFY LINK QUALITY OF EACH LINK SET    │ ~ 903
  └───────────────────────────────────────┘
                  │
  ┌───────────────────────────────────────┐
  │           SELECT CANDIDATE LINK SET,    │ ~ 905
  │       BASED ON LINK QUALITY OF LINK SETS │
  └───────────────────────────────────────┘
                  │
  ┌───────────────────────────────────────┐
  │ SELECT LINK TO BE USED FOR UPDATING ENCRYPTION KEY │ ~ 907
  │    FROM AMONG CANDIDATE LINKS INCLUDED  │
  │            IN CANDIDATE LINK SET         │
  └───────────────────────────────────────┘
                  │
           ┌─────────────┐
           │     END     │
           └─────────────┘
```

FIG. 10

1000

START

1001 — IS THERE UNASSOCIATED LINK INCLUDED IN CANDIDATE LINK SET?

NO

YES

1003 — SET UP LINK

1005 — SELECT LINK TO BE USED FOR UPDATING ENCRYPTION KEY BY USING CANDIDATE LINK INCLUDED IN CANDIDATE LINK SET

END

FIG. 11

1100

START

1101 — SET UP COMMUNICATION LINK
WITH EXTERNAL ELECTRONIC DEVICE

1103 — IDENTIFY ENCRYPTION KEY UPDATE PERIOD
OF COMMUNICATION LINK

1105 — IS ENCRYPTION KEY UPDATED? — NO

YES

1107 — DOES
COMMUNICATION LINK OPERATE
IN LOW POWER MODE? — NO

YES

1109 — SWITCH COMMUNICATION LINK TO ACTIVE MODE

1111 — RESTRICT COMMUNICATION LINKFROM SWITCHING
TO LOW POWER MODEUNTIL ENCRYPTION KEY IS UPDATED

END

FIG. 12

1200

```
        ┌─────────────┐
        │    START    │
        └─────────────┘
               │
               ▼
┌─────────────────────────────────────────┐
│ SET UP PLURALITY OF LINKS WITH ELECTRONIC DEVICE │── 1201
└─────────────────────────────────────────┘
               │
               ▼
┌─────────────────────────────────────────┐
│ OBTAIN INFORMATION RELATED TO LINK TO BE USED │── 1203
│         FOR UPDATING ENCRYPTION KEY       │
└─────────────────────────────────────────┘
               │
               ▼
┌─────────────────────────────────────────┐
│ SELECT LINK TO BE USED FOR UPDATING ENCRYPTION KEY │── 1205
└─────────────────────────────────────────┘
               │
               ▼
┌─────────────────────────────────────────┐
│        TRANSMIT INFORMATION RELATED       │── 1207
│        TO UPDATE OF ENCRYPTION KEY        │
└─────────────────────────────────────────┘
               │
               ▼
        ┌─────────────┐
        │     END     │
        └─────────────┘
```

# FIG. 13

```
                                              1320                    1322
                                               ⌒                       ⌒

      ┌─────────┬───────┬──────────┬─────────┬─────────┬─────────┐
      │ Key ID  │  Tx   │ Reserved │ Link ID │   PN    │   GTK   │
      └─────────┴───────┴──────────┴─────────┴─────────┴─────────┘
```

```
                      1302                            1304
                       ⌒                               ⌒

      ┌─────────┬──────────┬──────────┬───────────┬──────────────┐
1300  │  Type   │  Length  │   OUI    │ Data Type │     Data     │
      └─────────┴──────────┴──────────┴───────────┴──────────────┘
```

```
                                        1310
                                         ⌒

      ┌──────────────┬──────────┬─────────────────────────┐
      │   00-0F-AC   │    16    │       MLO GTK KDE        │
      └──────────────┴──────────┴─────────────────────────┘
```

EP 4 761 309 A1

<div style="text-align:right">**TRANSLATION**</div>

## INTERNATIONAL SEARCH REPORT

| International application No. |
|---|
| **PCT/KR2025/013017** |

### A. CLASSIFICATION OF SUBJECT MATTER

**H04W 12/047**(2021.01)i; **H04L 9/08**(2006.01)i; **H04W 12/08**(2009.01)i; **H04W 24/08**(2009.01)i; **H04W 84/12**(2009.01)i

According to International Patent Classification (IPC) or to both national classification and IPC

### B. FIELDS SEARCHED

Minimum documentation searched (classification system followed by classification symbols)

H04W 12/047(2021.01); H04W 12/04(2009.01); H04W 12/0433(2021.01); H04W 12/06(2009.01); H04W 76/11(2018.01); H04W 76/15(2018.01); H04W 8/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: multiple links, encryption key refresh cycle, encryption key, link quality, link selection

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0138012 A (CANON KABUSHIKI KAISHA) 05 October 2023 (2023-10-05) paragraphs [0015]-[0055]; and claim 1 | 1-15 |
| A | US 2010-0054179 A1 (MEYER, David) 04 March 2010 (2010-03-04) paragraphs [0040]-[0049]; and claim 1 | 1-15 |
| A | KR 10-2024-0084407 A (SAMSUNG ELECTRONICS CO., LTD.) 13 June 2024 (2024-06-13) paragraphs [0122]-[0134]; and figure 5 | 1-15 |
| A | US 2020-0404496 A1 (NXP USA, INC.) 24 December 2020 (2020-12-24) paragraphs [0015]-[0018]; and claim 1 | 1-15 |
| A | US 2021-0368322 A1 (MEDIATEK SINGAPORE PTE. LTD.) 25 November 2021 (2021-11-25) paragraphs [0110]-[0114]; and claim 1 | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 November 2025** | **27 November 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/013017**

| Patent document cited in search report | | | Publication date (day/month/year) | Patent family member(s) | | | Publication date (day/month/year) |
|---|---|---|---|---|---|---|---|
| KR | 10-2023-0138012 | A | 05 October 2023 | CN | 116868607 | A | 10 October 2023 |
| | | | | EP | 4297506 | A1 | 27 December 2023 |
| | | | | JP | 2022-124835 | A | 26 August 2022 |
| | | | | JP | 2025-131793 | A | 09 September 2025 |
| | | | | JP | 7723483 | B2 | 14 August 2025 |
| | | | | US | 12445284 | B2 | 14 October 2025 |
| | | | | US | 2023-0388117 | A1 | 30 November 2023 |
| | | | | WO | 2022-176384 | A1 | 25 August 2022 |
| US | 2010-0054179 | A1 | 04 March 2010 | US | 8363617 | B2 | 29 January 2013 |
| KR | 10-2024-0084407 | A | 13 June 2024 | EP | 4608017 | A1 | 27 August 2025 |
| | | | | US | 2025-0293846 | A1 | 18 September 2025 |
| | | | | WO | 2024-123046 | A1 | 13 June 2024 |
| US | 2020-0404496 | A1 | 24 December 2020 | US | 11272364 | B2 | 08 March 2022 |
| US | 2021-0368322 | A1 | 25 November 2021 | CN | 115379589 | A | 22 November 2022 |
| | | | | US | 11924911 | B2 | 05 March 2024 |

Form PCT/ISA/210 (patent family annex) (July 2022)